# EUROPEAN PATENT APPLICATION

(11) **EP 4 759 442 A1**
(43) Date of publication of application: **17.06.2026**
(21) Application number: 24851671.8
(22) Date of filing: 30.07.2024
(51) Int. Cl.: B06B 1/04, B60R 22/38, B60R 22/48

(54) **SEAT BELT DEVICE AND VIBRATION SYSTEM THEREOF**

(30) Priority: 08.08.2023 JP 2023129530
(71) Applicant: AUTOLIV DEVELOPMENT AB, 44783 Vargarda (JP)
(72) Inventor: OGAWA, Kentaro, Yokohama-shi, Kanagawa 222-8580 (JP); HARADA, Tatsuya, Yokohama-shi, Kanagawa 222-8580 (JP); SATO, Yuya, Yokohama-shi, Kanagawa 222-8580 (JP)
(74) Representative: Müller Verweyen
(86) International application number: PCT/JP2024/027076
(87) International publication number: WO 2025/033246

(57) **Abstract**

To provide a seat belt device and vibration system thereof capable of giving an occupant a comfortable skin sensation linked to various sound sources including audio. To achieve this, the vibration system (100) of the seat belt device (1) configured to wind the seat belt (2) for a vehicle according to the present disclosure is a vibration system (100) including an actuator provided in the seat belt device (1), and a control device that processes an input signal based on a prescribed vibration generation trigger to extract a rhythm component signal, performs pulse modulation processing according to the difference between the rhythm component signal and a prescribed threshold at fixed intervals, and drives the actuator according to the pulse-modulated signal.

## Description

### TECHNICAL FIELD

The present invention relates to a seat belt device and a vibration system thereof.

### BACKGROUND ART

Conventionally, a seat belt device for a vehicle has been proposed that applies vibration stimulation to an occupant, particularly a driver, that is linked with tempo of music (see, for example, Patent Document 1). In addition, a device has been proposed that conveys a warning or the like to an occupant as a sensation transmitted through the skin, such as vibration or a change in tension (see, for example, Patent Document 2).

### RELATED ART DOCUMENTS

### PATENT DOCUMENTS

Patent Document 1: Japanese Unexamined Patent Application 2022-149732
Patent Document 2: Japanese Unexamined Patent Application 2008-044570

### SUMMARY OF THE INVENTION

### PROBLEM TO BE SOLVED BY THE INVENTION

However, the conventional devices described above have only been proposed with the main focus on constructing means for issuing warnings or alerts, such as gently notifying the driver of abnormal speed by varying the timing of the seat belt vibration (Patent Document 1) or providing a seat belt reminder function (Patent Document 2). In other words, there is no technology that uses a device that generates vibrations in a seat belt device for a different purpose, such as technology that has been proposed from a new perspective, namely giving occupants a comfortable skin sensation that is linked to various sound sources, including audio.

Therefore, an object of the present invention is to provide a seat belt device and a vibration system thereof that can give occupants a comfortable skin sensation linked to various sound sources including audio.

### MEANS FOR SOLVING THE PROBLEM

An aspect of the present invention that has been conceived to resolve this problem is a vibration system of a seat belt device configured to wind a vehicle seat belt, the vibration system of a seat belt device including:
an actuator provided in the seat belt device; and
a control device configured to process an input signal based on a prescribed vibration generation trigger to extract a rhythmic component signal, to perform pulse modulation processing at a fixed interval in accordance with a difference between the rhythmic component signal and a prescribed threshold, and to drive the actuator in accordance with a signal subjected to the pulse-modulated signal.

In this manner of vibration system for a seat belt device, vibration is generated in response to various vibration generation triggers, including audio sound sources in the vehicle, and the vibration is generated in response to the sound pressure levels of the vibration generation trigger. By generating vibrations linked to a sound source in this manner, a comfortable skin sensation can be given to the occupant. In this regard, conventional technology (for example, Patent Document 1) simply vibrates in the same manner if the tempo is the same, even if the music is different; therefore, providing occupants with a comfortable skin sensation linked to the sound source, or the like is not possible.

With the vibration system of a seat belt device described above, the control device may include a low-pass filter that attenuates high-frequency components of the input signal.

With the vibration system of a seat belt device described above, the prescribed vibration generation trigger may be an audio signal of music being played in the vehicle cabin.

The vibration system of a seat belt device described above may include: a spindle that winds up the seat belt;
a drive motor that generates power to rotate the spindle; and a clutch that transmits power from the drive motor to the spindle when the drive motor rotates in one direction; wherein
the drive motor is used as the actuator.

With the vibration system of a seat belt device described above, the drive motor is a DC brush motor.

With the vibration system of a seat belt device described above, the control device may reverse the rotation direction of the drive motor to disengage the clutch, and then may rotate the drive motor in one direction to engage the clutch.

With the vibration system of a seat belt device described above, the clutch may be released at a timing when the drive motor is not operating in response to the pulse-modulated signal.

The vibration system of a seat belt device described above may include:
a tongue attached to the seat belt;
a buckle to which the tongue is detachably attached;
a bracket supporting the buckle; and
a vibration motor provided in the buckle; wherein
the motor is used as the actuator.

With the vibration system of a seat belt device described above, the vibration motor may be a DC brush motor having an eccentric weight.

With the vibration system of a seat belt device described above, of the rhythm component signals, if there is a signal that exceeds the prescribed threshold that is shorter than a prescribed minimum operating time T_min, a compensation operation time T_add may be added to the signal by the control device.

With the vibration system of a seat belt device described above, of the rhythm component signals, if there is a signal that exceeds the prescribed that is longer than a predetermined maximum drive time T_max, the control device may stop drive of the actuator for the portion of the signal that exceeds the maximum drive time T_max.

With the vibration system of a seat belt device described above, the control device may temporarily increase the current value applied to the vibration motor at the beginning when driving the vibration motor in accordance with the pulse-modulated signal, and then may decrease the current value.

With the vibration system of a seat belt device described above, regenerative braking may be used before stopping the vibration motor that is driven in response to the pulse-modulated signal.

Another aspect of the present invention is a seat belt device including a vibration system as described above.

Yet another aspect of the present invention is the seat belt device for a driver's seat equipped with a vibration system described above, wherein when the control device detects that the seat belt has been pulled out by the driver leaning forward, for example, the control device stops the process of driving the actuator in accordance with the pulse-modulated signal, reverses the direction of rotation of the drive motor to release the clutch, and upon detection that the driver has returned to their original position, the control device rotates the drive motor in one direction to connect the clutch, and resumes the process of driving the actuator in accordance with the pulse-modulated signal.

### EFFECT OF THE INVENTION

Therefore, the present invention can provide a seat belt device and a vibration system thereof that can give occupants a comfortable skin sensation linked to various sound sources including audio.

### BRIEF DESCRIPTION OF THE DRAWINGS

FIG. 1 is an exploded perspective view of a motor, a power transmission mechanism, a final gear, a spindle, and the like;
FIG. 2 is a diagram depicting an outline of a configuration of an ECU (control device);
FIG. 3A is a block diagram depicting an example of a configuration of an ECU (control device);
FIG. 3B is a diagram depicting a detailed configuration example from a signal generating unit of an ECU to a motor drive circuit;
FIG. 3C is an explanatory diagram of a technique for extracting a plurality of bands from higher frequencies and driving a motor with a more complex rhythmic component;
FIG. 3D is an explanatory diagram of an example in which a motor drive signal is generated by a signal generating unit (signal processor) equipped with Al;
FIG. 4 (A) is a graph depicting the change in signal level of the rhythm component signal extracted by processing the input signal, (B) is a graph depicting the change in motor current after performing pulse modulation processing according to the difference between the rhythm component signal and a prescribed threshold at a fixed interval, and (C) is a graph depicting the change in belt tension when the drive motor is driven;
FIG. 5 is an explanatory graph of pulse width modulation processing while depicting changes in the rhythm component signal and motor current;
FIG. 6 is an explanatory graph of a compensation process when a rhythm component signal that exceeds a prescribed threshold is short, in which (A) is a graph depicting the change in signal level of the rhythm component signal, and (B) is a graph depicting the change in motor current;
FIG. 7 is an explanatory graph of compensation processing in a case where, of the rhythmic component signals, a signal exceeding a prescribed threshold continues for a long period, in which (A) is a graph depicting a change in a signal level of the rhythmic component signal, and (B) is a graph depicting a change in motor current;
FIG. 8 is an explanatory graph of the process of reducing uneven wear of the commutator in the drive motor, in which (A) is a graph depicting changes in the signal level of an input signal with a certain degree of regularity, and (B) is a graph depicting changes in motor current and the timing of autonomous release operation;
FIG. 9 is an explanatory diagram of an aspect in which a vibration motor provided in a buckle is used to generate vibration when the seat belt is not fastened;
FIG. 10 is a diagram depicting a vibration motor provided in the buckle and an ECU connected to the vibration motor;
FIG. 11 is an explanatory graph for a driving example of a motor that generates vibration by rotation of an eccentric weight, in which (A) is a graph depicting a change in a signal level of a rhythmic component signal, and (B) is a graph depicting a change in motor current;
FIG. 12 is a flowchart depicting a control example of a seat belt device for a driver;
FIG. 13 is a diagram depicting another example of an input signal based on a vibration generation trigger, in which one occupant connects a portable game console to the in-car network and enjoys the corresponding vibration, while the remaining passengers enjoy vibrations linked to the car audio;
FIG. 14 is an explanatory diagram depicting another example of an actuator that generates vibrations;
FIG. 15 is a diagram depicting an example in which a seat belt device with a vibration function can be recognized as a game pad by a tablet or portable game console, and can be connected via wire or wirelessly to execute vibration commands in an application;
FIG. 16 is a diagram depicting an example in which a terminal is connected via a car audio system and recognized as a game pad, enabling a user to experience a vibration function that utilizes the vibration system of a seat belt device;
FIG. 17 depicts an example of how the vibration system of the seat belt device can be linked to movie viewing and video; and
FIG. 18 is a diagram depicting an example of a method for generating and driving a vibration system of a seat belt device by analyzing and recognizing images and sounds in real time.

### EMBODIMENTS OF THE INVENTION

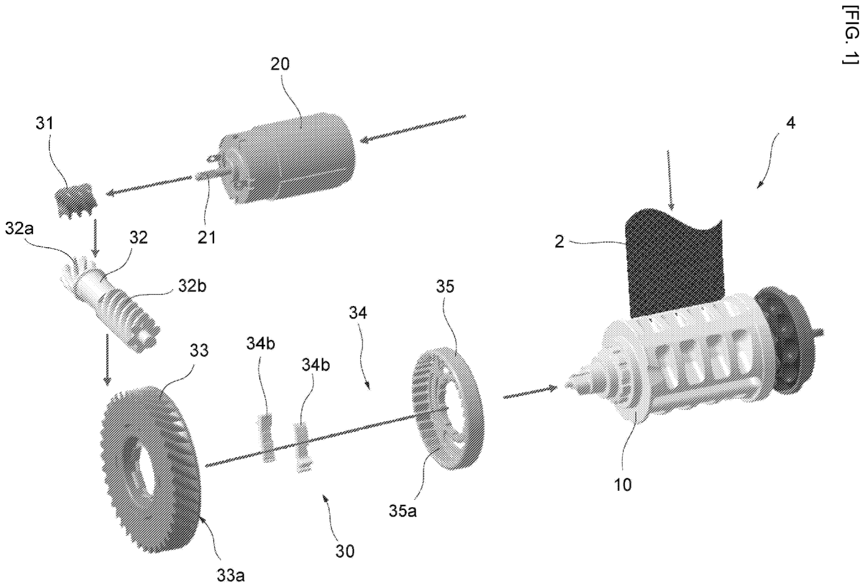

Preferred embodiments of a seat belt device and vibration system thereof according to the present invention will be described in detail below with reference to the drawings (see FIG. 1 to FIG. 14).

### [Outline of Configuration of Seat Belt Retractor]

First, an outline of the structure of a seat belt retractor 4 that constitutes a seat belt device 1 will be described (see FIG. 1).

The seat belt retractor 4 is a device for a vehicle configured to retract a seat belt 2. The seat belt retractor 4 of the present embodiment is a motor-equipped retractor for a motor-equipped seat belt (sometimes referred to as a "PP" (Pre-Pretensioner)) that winds a seat belt 2 using power from a motor, and is configured to include a spindle 10, a drive motor 20, a power transmission mechanism 30, a final gear 33, a clutch 34, and the like (see FIG. 1).

The spindle 10 is a member that winds up the seat belt 2, and is provided so as to be rotatable forward and backward around a central axis (see FIG. 1). Note that for convenience, in the present specification, the direction of rotation of the spindle 10, and the like, in which the forward rotation that winds up the seat belt 2 will be referred to as the "wind direction", and the reverse direction that unwinds the seat belt 2 will be referred to as the "clutch release direction".

The drive motor 20 is a power source that generates power to rotate the spindle 10. When the drive motor 20 is rotated in one direction (referred to herein as a "first direction"), power is transmitted by the clutch 34 and the spindle 10 rotates in the wind direction. In addition, when the motor 20 is rotated in a second direction opposite to the first direction, the final gear 33 rotates in the clutch release direction (see FIG. 1).

The power transmission mechanism 30 is a mechanism for transmitting the power of the drive motor 20 to the spindle 10. For example, in the present embodiment, the power transmission mechanism 30 including a motor gear 31, a transmission shaft (intermediate gear) 32, a final gear 33, and a clutch 34 is used. The motor gear 31 is composed of a worm attached to an output shaft 21 of the drive motor 20 (see FIG. 1). The transmission shaft 32 is a member that transmits the power of the drive motor 20 to the final gear 33. The transmission shaft 32 is provided with a first helical gear 32a that meshes with the motor gear 31 and a second helical gear 32b that meshes with a final gear 33 (see FIG. 1).

The final gear 33 is one of the gears that composes the power transmission mechanism 30 and is composed of a large-diameter helical gear that is rotatably disposed on the central axis of the spindle 10. The final gear 33 in the present embodiment is a gear provided at an end of a gear train that constitutes the power transmission mechanism 30. The final gear 33 has helical teeth 33a formed on an outer periphery thereof, with which the second helical gear 32b of the transmission shaft 32 meshes.

The clutch 34 is a mechanism for transmitting or cutting off rotation of the final gear 33 to the spindle 10, and is disposed between the final gear 33 and the spindle 10 (see FIG. 1). In the present embodiment, the clutch 34 is a so-called one-way clutch that is in a coupled state when the drive motor 20 is rotated in the first direction, transmitting the rotation of the final gear 33 to the spindle 10, and is not coupled when the motor 20 is rotated in the second direction. The configuration of the one-way clutch itself is similar to that of a conventional seat belt retractor 4, so a detailed description of the configuration is omitted in the present specification; however, for example, a configuration including a one-way clutch pawl (latch) 34b that engages with a ratchet gear 35a only when the final gear 33 rotates in one direction corresponds thereto (see FIG. 1).

### [Seat Belt Device Vibration System]

The vibration system 100 of the seat belt device 1 according to the present invention is linked to various vibration generation triggers and expresses or achieves vibrations that correspond to the sound pressure level of the vibration generation triggers, thereby providing the occupant with a comfortable skin sensation. The vibration system 100 of the present embodiment includes an ECU (control device) 200 that applies a prescribed current to an actuator, such as a drive motor 20, to perform control to drive the actuator in a specific manner.

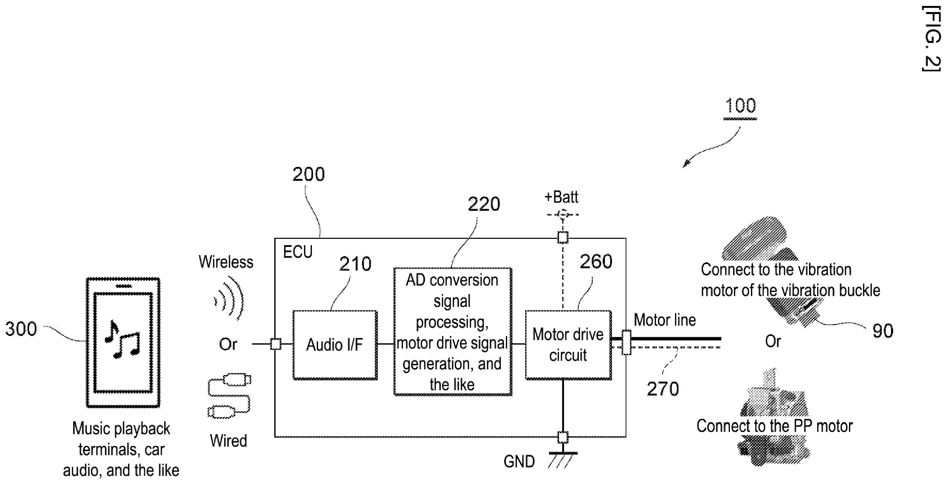

A variety of vibration generation triggers can be used. As an easy-to-understand example, the following describes a case where a signal from an audio sound source in a vehicle is used as a vibration generation trigger. The audio sound source in the vehicle may be a sound source of the in-vehicle audio, or may be a sound source transmitted wirelessly or via a wire from a portable device such as a terminal 300 for playing music (see FIG. 2, and the like).

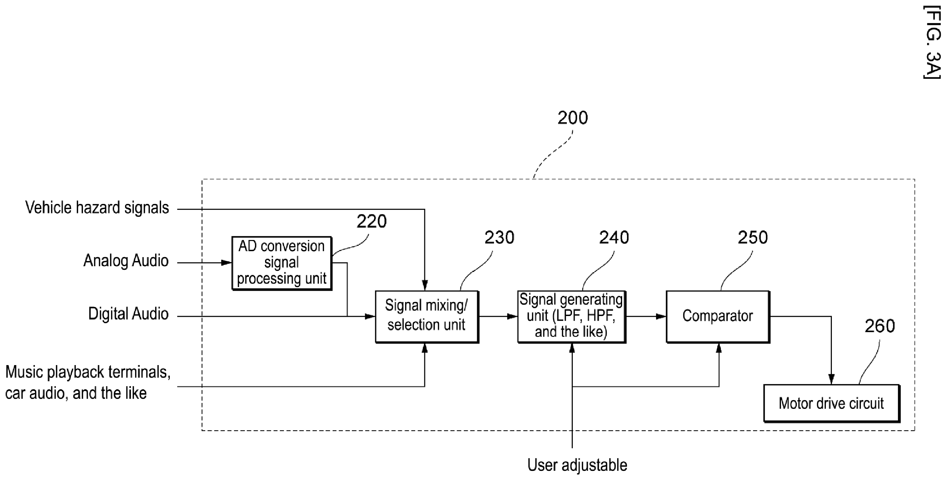

The ECU 200 includes an audio I/F 210, an AD conversion signal processing unit 220, a signal mixing/selection unit 230, a signal generating unit (signal processor) 240, a comparator 250, and a motor drive circuit 260 (see FIG. 2 and FIG. 3A).

A signal such as music is input to the audio I/F 210 from an audio sound source. If the input signal is analog, the AD conversion signal processing unit 220 converts the signal into digital (see FIG. 3A). The signal mixing/selection unit 230 receives digital signals input from the audio I/F 210 or signals converted to digital by the AD conversion signal processing unit 220, as well as operation signals transmitted from portable devices connected wirelessly or via a wire, and mixes or selects the signals and outputs the signals. Note that the ECU 200 of the present embodiment is configured to also receive alarm requests from safety monitoring devices, such as signals informing of danger to the vehicle, at the signal mixing/selection unit 230 (see FIG. 3A).

Note that the audio signal input from audio I/F 210 is not limited to an in-vehicle audio signal, but may be a signal transmitted from the terminal 300 that is a mobile terminal (such as a smartphone) (see FIG. 2). Connection to a mobile terminal can be made via a wired or wireless connection. If the audio signal is an analog signal, the signal is AD converted if connected by wire, and then digitally processed (by software) and converted into an actuator drive signal. When the audio signal is a digital signal (possibly input via S/PDIF, HDMI (registered trademark), and the like), electrical or optical information is received and passed through a decoder to generate a drive signal. Alternatively, if a wireless connection is established using a wireless standard such as Bluetooth (registered trademark), an audio signal is captured and similar processing is performed.

The signal generating unit 240 processes the signal output from the signal mixing/selection unit 230 to extract the rhythm component signal, and performs pulse modulation processing at a fixed interval according to the difference between the rhythm component signal and a prescribed threshold value, thereby processing the input trigger signal so as to use for motor drive timing. The signal generating unit 240 in the ECU 200 of the present embodiment is equipped with a low-pass filter (LPF) that attenuates high-frequency components of the input signal (see FIG. 3A). Of course, instead of this, a high pass filter (HPF) that attenuates low frequency components of the input signal may be installed. Note that in the case where the input signal is a music signal, for example, the signal generating unit 240 may be provided with a function to read genre information or the like included in recent digital sound sources and select an appropriate operation.

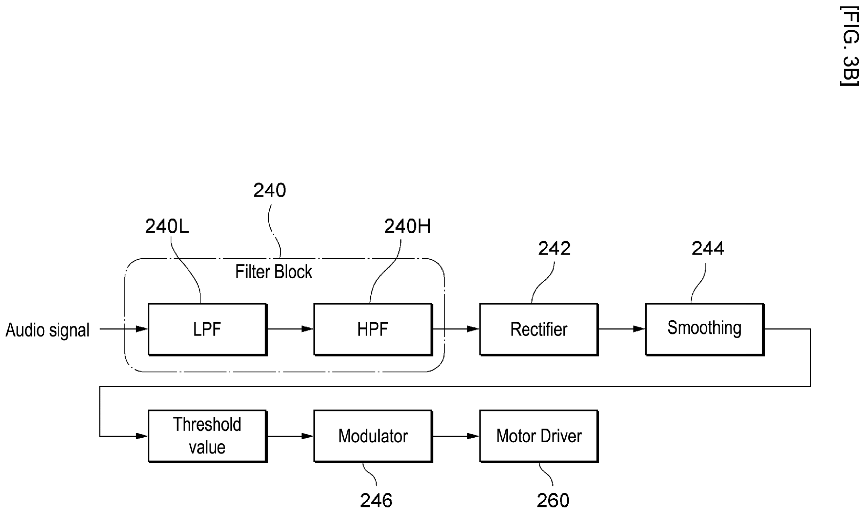

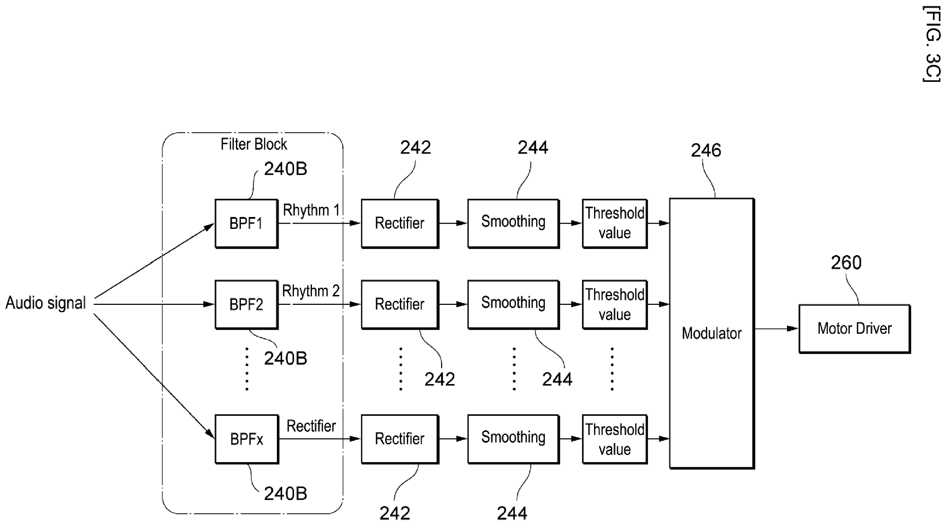

Here, as a specific example of the signal generating unit 240, a case where a signal component of a rhythm component is extracted will be described. FIG. 3B is a diagram depicting the flow of extracting bass signal components and extracting rhythm components in a detailed example configuration from the signal generating unit 240 to the motor drive circuit 260. Here, the bass components are extracted by the LPF 240L, and the excess DC components are attenuated by a HPF 240H, thereby reducing unnecessary actuation at the time of determination at a subsequent threshold. Instead of the two systems of filters, LPF 240L and HPS 240H, a band-pass filter BPF 240B (see FIG. 3C) that combines the two systems may be used. Note that the reference numeral 242 represents a rectifier, 244 denotes a smoothing circuit, and 246 denotes a modulating circuit (see FIG. 3B).

The above is one example of a method for driving the rhythm by focusing on only the bass frequency band (see FIG. 3B), but other methods are also conceivable, for example, by extracting a plurality of frequency bands closer to the treble and driving them with more complex rhythmic components (see FIG. 3C). In this case, the signal generating unit 240 may be configured with an analog circuit as a filter, or may be configured to process the signal in a digital signal state using software. In addition, a configuration in which the entirety of the ECU (control device) 200 is implemented by software processing can also be considered. For example, if each block depicted in FIG. 3C is configured by software, the user can arbitrarily enable or disable the bandwidth to be used, allowing adjustment according to the user's preferences.

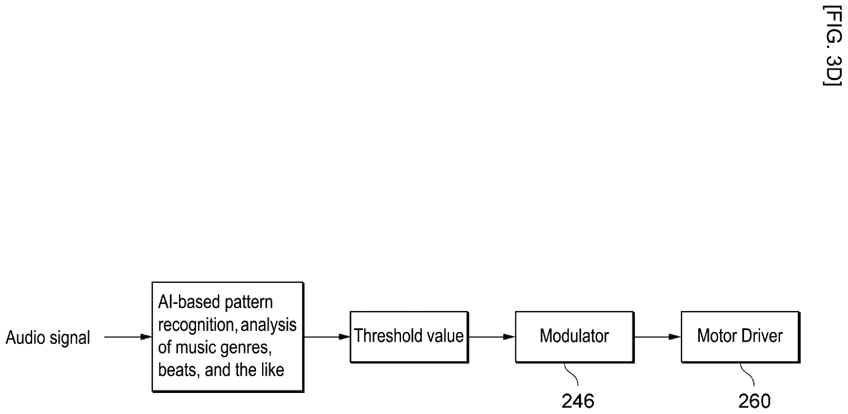

In addition to the above-mentioned methods, a signal generating unit (signal processor) 240 equipped with Al may be used to generate a motor drive signal by performing pattern recognition of music such as input audio signals, analyzing genres, beats, and the like (see FIG. 3D).

The comparator 250 outputs a signal for driving the drive motor 20 in response to the signal output from the signal generating unit 240, for example. The motor drive circuit 260 applies a current (current is constant value) to the motor connection line 270 to drive the drive motor 20 based on the signal output from the comparator 250 (see FIG. 2).

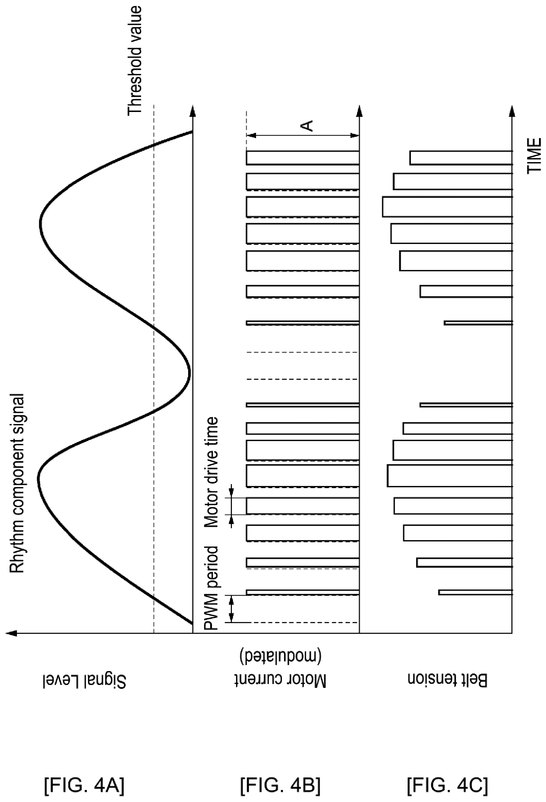

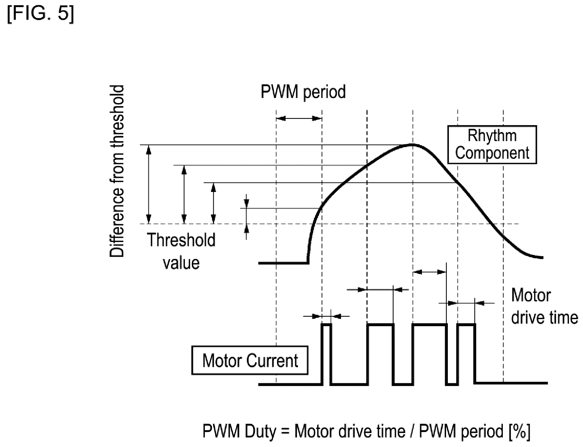

When the drive motor 20 mounted on the seat belt retractor 4 is a DC motor, the winding torque of the seat belt 2 is controlled via various gears of the power transmission mechanism 30 by controlling the applied current. However, in this case, with regard to the winding torque of the seat belt 2, a winding force that changes continuously with time may be difficult to generate due to the influence of static friction of the driving mechanism such as gears. In this respect, since a vibration operation in which winding is instantaneously stopped repeatedly from a stationary state can be said to be relatively easy, this operation can be used to achieve a skin sensation in which intensity continuously changes with respect to time. An example of signal processing when such a vibration operation is performed by the ECU 200 will be described below with reference to examples of waveforms (see FIG. 4 and FIG. 5). After processing by the signal generating unit 240 and extracting the rhythm component signal, the signal undergoes pulse width modulation processing (PWM conversion) at regular PWM cycles according to the difference between the rhythm component signal and a prescribed threshold value (see FIG. 4(A) and FIG. 5). In this case, if the difference between the rhythm component signal and the threshold value is large, the PWM duty increases, lengthening the drive time of the drive motor 20, whereas if the difference between the rhythm component signal and the threshold value is small, the PWM duty (in other words, motor drive time/PWM period [%]) decreases, shortening the drive time of the drive motor 20 (see FIG. 4(B) and FIG. 5). If the drive time of the drive motor 20 is longer, the seat belt 2 is wound up by a larger amount, and the tension of the seat belt 2 increases (see FIG. 4C). In this manner, by controlling the time for which current flows to the drive motor 20 by PWM, intermittent changes in tension to the seat belt 2 can be applied. From the perspective of an occupant, such intermittent changes in tension of the seat belt 2 are perceived as a comfortable vibration that is linked to the rhythmic component of the sound source, in other words, the sound pressure level of the sound source, as a skin sensation. The vibration system 100 of the seat belt device 1 that generates such vibrations can be a particularly effective configuration when targeting a vibration generation trigger having a level that changes over time, such as an audio sound source signal.

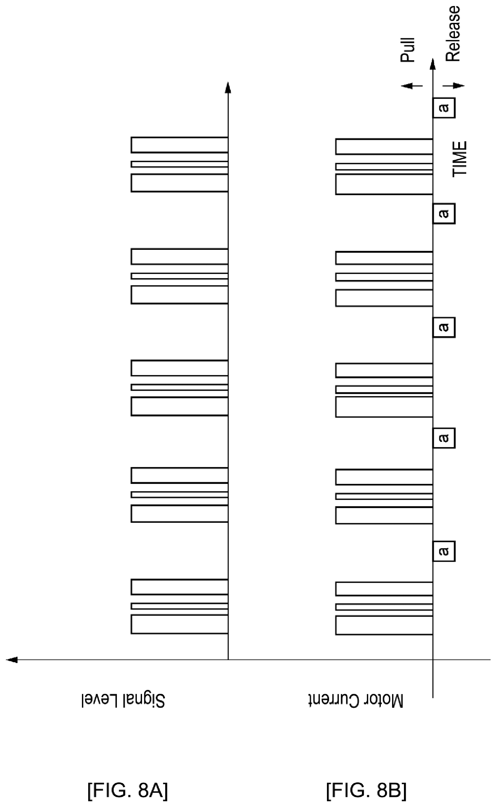

In addition, when a DC brush motor is used as the drive motor 20, which is the actuator that generates the vibration, the vibration may be generated while the ECU 200 performs processing to reduce uneven wear of the commutator within the drive motor 20. With the vibration system 100 of the present embodiment, the drive motor 20, which was rotating in a first direction (wind direction), is reversed to a second direction (clutch release direction) midway to release the clutch 34, and then the drive motor is gently rotated again in the first direction (wind direction) to connect the clutch 34. This changes the position of the brushes within the drive motor 20, avoids concentrating the operating range of the brushes in a narrow range, and reduces uneven wear on the commutator. In this case, the clutch is preferably released during a non-operating period or an extremely short period when tension on the seat belt 2 is not required. For example, when synchronizing vibration with a signal from an audio sound source, if a signal with a certain degree of regularity is input (see FIG. 8(A)), the drive motor 20 can be reversed in the second direction (clutch release direction) at a timing (non-operating period) when the drive motor 20 is not operating for vibration and during a period when the wind operation of the seat belt 2 is not affected, for example, at the timing indicated by the reference numeral "a" in FIG. 8B, to autonomously release the clutch 34 (see FIG. 8). In this manner, if the clutch is autonomously released at a timing when the drive motor 20 is not operating in accordance with the pulse-modulated signal, the wind operation of the seat belt 2 is not affected.

### [Another Example of Vibration System for Seat Belt Device]

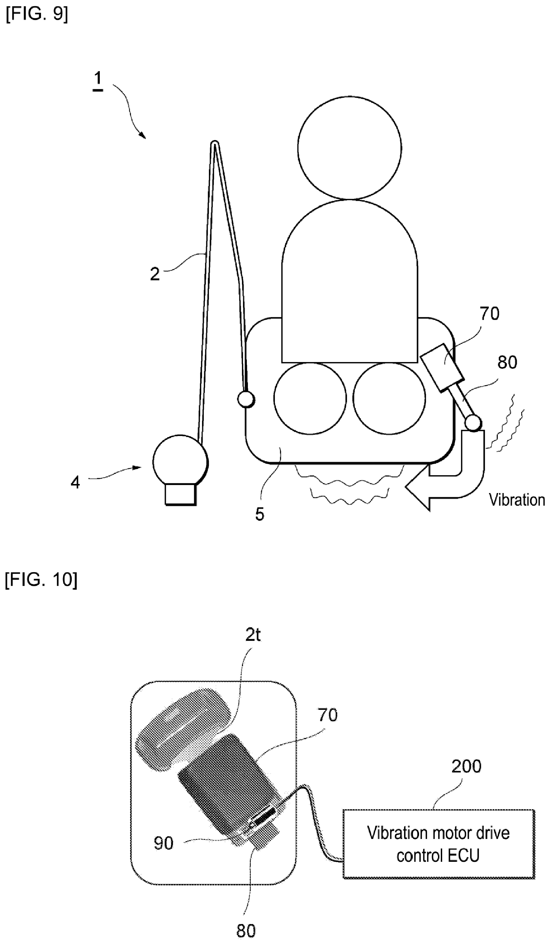

Up to this point, an aspect in which vibration is generated by driving a drive motor 20 constituting a seat belt retractor 4 has been described; however, another motor or the like can also be used as an actuator for generating vibration. As another aspect, a case where a vibration motor 90 provided in a buckle 70 is used will be described below (see FIGS. 9 and 10).

The seat belt device 1 in this example includes a tongue 2t attached to the seat belt 2, a buckle 70 configured to allow the tongue 2t to be attached and detached, a buckle stay (bracket) 80 that supports the buckle 70, and a vibration motor 90 mounted on the buckle 70 (see FIG. 9 and FIG. 10). The vibration motor 90 is used as a relatively inexpensive vibration actuator, and in the present embodiment, a DC brush motor having an eccentric weight that generates vibration by rotating the eccentric weight is used as the vibration motor 90 (see Figure 10). Note that in addition to such a motor, an actuator that generates vibrations by reciprocating motion can also be used. When the vibration motor 90 is mounted on the buckle 70 as in this example, vibrations can be transmitted to a seat 5 through the buckle stay 80, and the device can also be used to vibrate the seat 5 using an audio signal. In addition, when the vehicle is stopped, the seat 5 can be vibrated using the vibration system 100 even when the seat belt 2 is not fastened. Incidentally, the frequency must be changed when vibration is transmitted to a user through a seat belt 2 worn by the user as compared with when vibration is transmitted to the seat when the seat belt is not being worn, in order to efficiently transmit vibration. The rotation speed of these motors (actuator operating frequency) is switched by a switch signal that indicates whether the buckle is engaged.

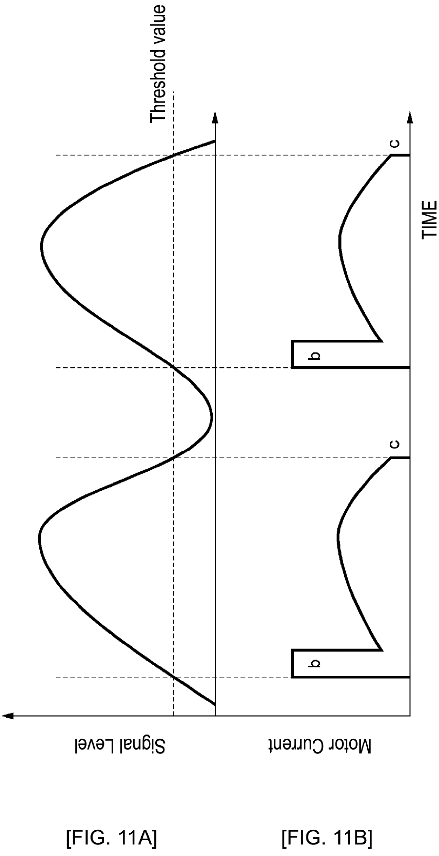

As described above, motors that generate vibrations by rotating an eccentric weight are generally suited to emitting constant, continuous vibration, but they take time to receive a signal and generate vibration, and stopping vibration immediately is difficult due to the influence of the inertial movement of the weight. In short, since such a motor is not well suited to generating vibration having fine variations, a control method must be devised in order to obtain effects similar to effects obtained when using the drive motor 20 that drives the aforementioned seat belt retractor 4. Taking the above points into consideration, in the present embodiment, when the ECU 200 initially drives the vibration motor 90 in accordance with the pulse-modulated signal, the ECU temporarily increases the current value applied to the vibration motor 90, and then decreases the current value to converge so that the vibration does not become too large (see FIG. 11). More specifically, in the initial driving, a strong current is passed for a short period of time as depicted by the reference numeral b in FIG. 11, and then processing for reducing the current is performed to prevent the rotation from increasing too much, thereby eliminating the delay in start-up. In addition, when there is desire to stop the vibration motor 90 as depicted by the reference numeral c, in order to handle the residual vibration caused by the inertial motion of the weight, the motor can be stopped using, for example, a regenerative brake, thereby enabling clear distinguishing between the ON and OFF states of the vibration.

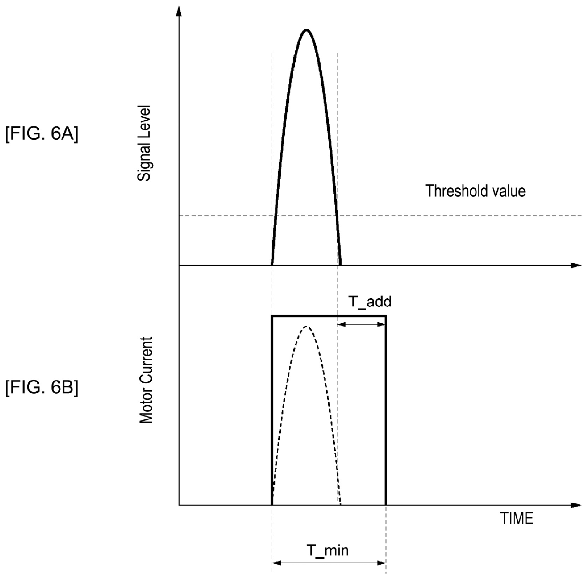

As described above, when vibration is generated by the rotation of an eccentric weight using an audio sound source or the like in a vehicle as a vibration generation trigger, depending on the trigger source (such as the sound source that serves as the trigger), the input signal to be activated may be short in duration, and actuators such as the drive motor 20 may not be able to fully react, making sufficient vibration difficult to ensure. When such a situation is anticipated, in the present embodiment, a minimum operating time T_min is set, and if a rhythm component signal that exceeds a prescribed threshold is shorter than the minimum operating time T_min, the ECU 200 adds a compensation operation time T_add to the signal (see FIG. 6). By doing so, even if the width of the time axis of the rhythm component signal that exceeds the prescribed threshold is short, the actuator can be caused to vibrate sufficiently.

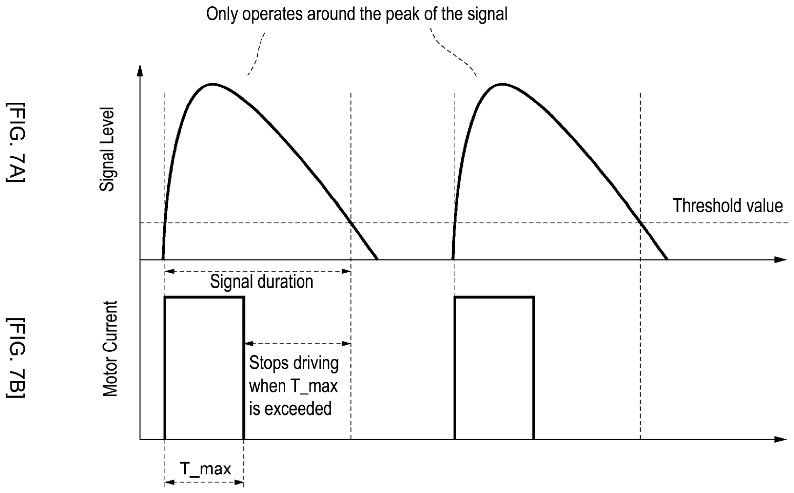

In addition, if the width of the time axis (signal duration) of the trigger signal is long, the driving may be performed only around the peak of the trigger signal where the driving is primarily desired, and then the driving may be stopped. This type of processing is particularly effective when linked to a music signal, in cases where only wanting to convey the peaks of the rhythm to the occupant as vibration. In the present embodiment, a maximum drive time T_max is set, and if any rhythm component signal that exceeds the threshold is longer than the maximum drive time T_max, the ECU 200 stops driving the actuator for the portion of the signal that exceeds the maximum drive time T_max (see FIG. 7). Note that if the set values for the minimum operating time T_min and the maximum drive time T_max as described above are made changeable by occupants or users from a terminal such as a portable device, the users will be able to adjust the vibration aspect according to their own preferences.

### [Example of Controlling the Driver's seat belt Device]

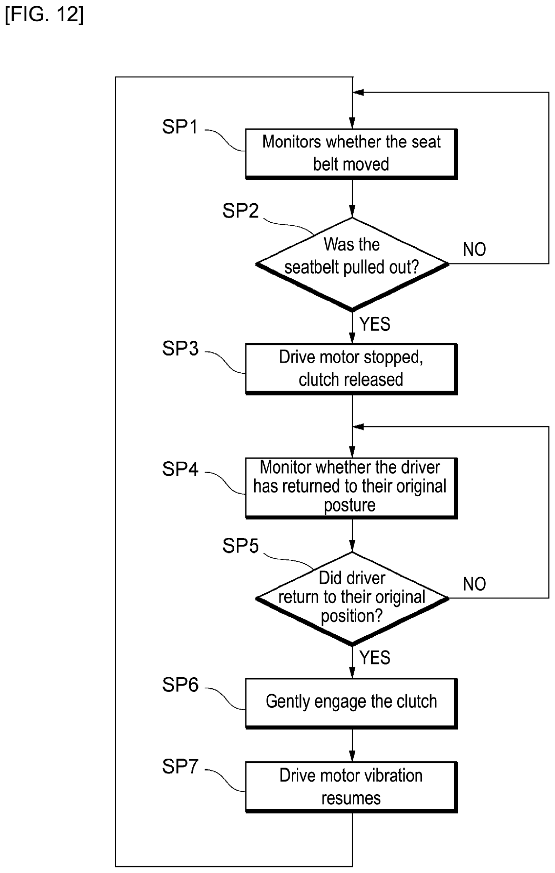

When a driver uses a seat belt device 1 provided with a vibration system 100 as described above, there are cases in which, when a seat belt 2 is in a retracted state, the driver has difficulty assuming a forward-leaning posture. In order to improve usability in this situation, the following control may be implemented so that when the user (in this case, the driver) applies force in the direction of pulling out the seat belt 2, the seat belt 2 is released or set to enable mechanically being pulled out. A specific control example will be described below (see FIG. 12).

First, a sensor (not depicted) is used to monitor whether the driver has moved in the direction of pulling out the seat belt 2, for example by leaning forward (step SP1). If the seat belt 2 is detected to have been pulled out (Yes in step SP2), a control device, such as the ECU 200, stops the process of driving the actuator (in this example, the drive motor 20) in accordance with the pulse-modulated signal, reverses the direction of rotation of the drive motor 20, and releases the clutch 34 (step SP3). Thereafter, the sensor monitors the movement of the seat belt 2 to determine whether the driver has returned to the original position (step SP4). If the driver is detected to have returned to the original position (Yes in step SP5), the drive motor 20 is rotated in one direction to gently connect the clutch 34 (step SP6), and the process of driving the drive motor 20 in accordance with the pulse-modulated signal to vibrate in conjunction with a sound source or the like is resumed (step SP7).

### [Another Example of Input Signal Based on Vibration Generation Trigger]

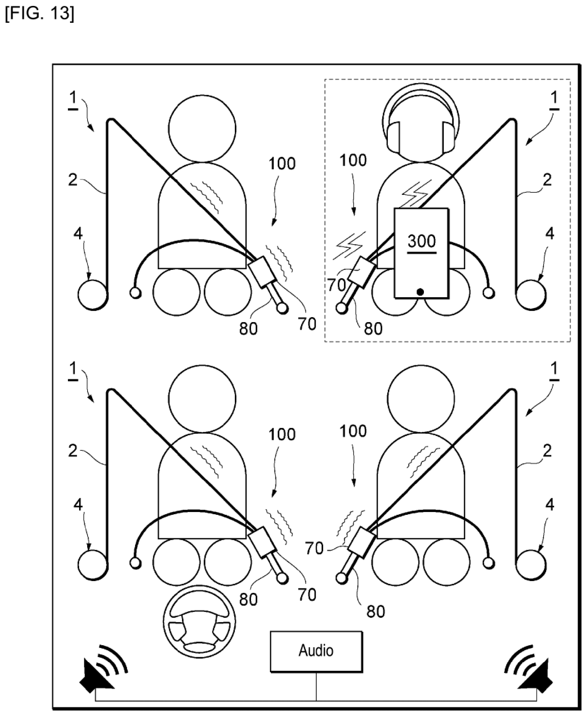

Up to this point, the vibration system 100 has been described using an example in which a sound source signal such as audio in a vehicle is used as a vibration generation trigger, but such a sound source signal is of course only one example of a vibration generation trigger. In other words, assuming that a seat belt 2 is individually worn by each occupant, the seat belt 2 can also be used for each occupant to enjoy entertainment through a skin sensation. For example, when an occupant other than the driver enjoys a game on a network-connectable portable game console or smartphone, by connecting the terminal (indicated by the reference numeral 300 in FIG. 13) to the in-vehicle network, and driving or causing to vibrate only the vibration system 100 of the seat belt device 1 in the occupant's seat in response to a vibration generation trigger that uses the game's background music or sound effects as a sound source signal, or a vibration generation trigger that is linked to visual elements such as visual effects, an effect that can only be experienced by that passenger can be achieved (see FIG. 13). Meanwhile, other occupants can use the car audio to enjoy the effect of seat belt vibrations according to that sound source.

### [Another Example of Actuator that Generates Vibration]

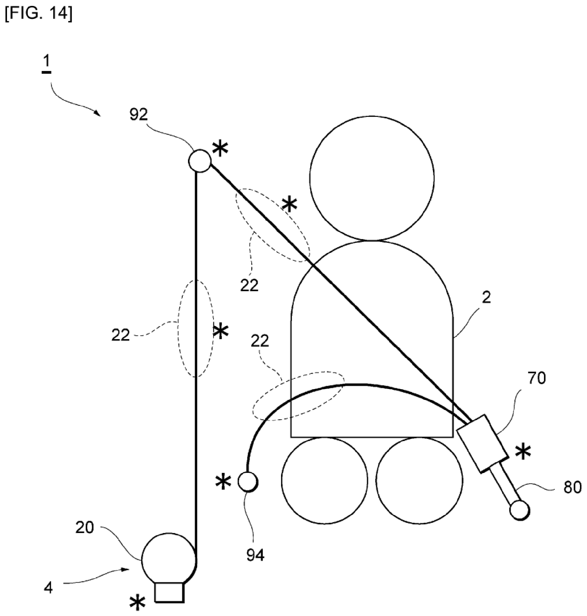

Up to this point, an example using a drive motor 20 as an actuator and an example using a vibration motor 90 have been indicated; however, these are merely preferred examples of actuators that generate vibration based on a prescribed vibration-generation trigger such as a sound-source signal, and devices of other aspects can also be used. To give a specific example, an actuator that is the source of vibration or tension change may be the seat belt retractor 4, the buckle 70, the tongue 2t, a shoulder anchor 92 or base thereof (not depicted), an outer anchor 94, or an actuator (indicated by the reference numeral 22 in FIG. 14) attached to, sewn into, or mounted on (the webbing of) the seat belt 2 included in the seat belt device 1 (see FIG. 14). (In FIG. 14, the locations where such motors can be placed are indicated by the reference numeral "*".)

According to the vibration system 100 of the seat belt device 1 of the present embodiment as described above, vibration corresponding to a vibration-generation trigger is expressed at each seat while being linked with various vibration-generation triggers including an in-vehicle audio sound source. In this manner, by generating vibration linked with a sound source or the like to provide a comfortable skin sensation to the occupant, the vibration system 100 of the present embodiment is greatly different from conventional technology where, even with different music, vibration was merely produced in the same manner as long as the tempo was the same. The seat belt device 1 having the functions described above can be used in all seats regardless of their position in the vehicle.

Further functions, applications, and effects that can be achieved by the vibration system 100 of the present embodiment are listed below.
1) The seat belt device 1 can effectively improve the sense of realism of entertainment.
2) The seat belt device 1 can also be used as a device to wake up the driver while driving.
3) The seat belt device 1 can also be used as a more effective vibration warning device.
4) Active use of the seat belt 2 contributes to an increase in the rate at which the seat belt 2 is worn.
5) The function of generating vibration in response to a vibration generation trigger can be achieved by either the drive motor 20 of the seat belt retractor 4 or the vibration motor 90 of the buckle 70, or by both.
6) When the vehicle is stopped, the vibration of the buckle 70 can be transmitted via the seat 5.
7) The seat belt 2 can have many functions.
8) The seat belts 2 are fastened by each occupant and can be used independently.

Note that the embodiment described above is an example of a preferred implementation of the present invention but is not limited thereto, and various modified implementations are possible within a range that does not depart from a gist of the present invention. For example, although not specifically depicted, in the vibration system 100 of the seat belt device 1 described above, instead of or at the same time as processing signals in the ECU 200, Al may be used to recognize a sound source such as music and perform processing including a modulation process.

In addition, in the past, vibration of the seat belt 2 was usually used for warning purposes, such as a signal to notify the occupants (especially the driver) of danger in the vehicle, but in recent years, with the improvement of collision safety functions, the function of analyzing danger from the surrounding situation has been developed. In view of these points, a vibration system 100 such as that of the present embodiment can be linked to collision safety functions that are constantly improving, and when danger approaches, entertainment-related operations such as music-linked operations can be stopped, or an alarm can be sounded after the operation has stopped to alert occupants of nearby danger. Such a function can be implemented by utilizing an alarm request (see FIG. 3A) received by the signal mixing/selection unit 230, such as a signal informing the driver of a danger to the vehicle, and by linking the ECU 200 with a vehicle-side controller (not depicted).

In addition, when the drive motor 20 of the seat belt retractor 4 is used as an actuator for generating vibrations as in the embodiment described above, a method can be adopted in which the seat belt 2 is vibrated or the tension is changed by repeatedly starting and stopping wind operation of the seat belt 2, or performing wind operation and then releasing the tension.

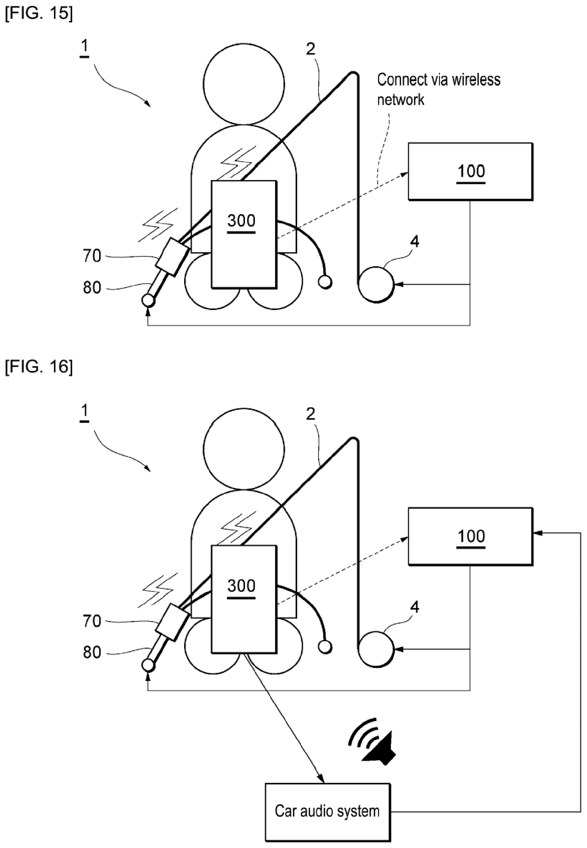

In addition, in the embodiment described above, a case has been described in which occupants other than the driver enjoy games on a network-connectable portable game console or smartphone, but this will be further described below. In recent years, terminals 300 such as operation devices (hereinafter also referred to as game pads) that can be connected to PCs or tablets have become available on the market. They often have vibration devices to enhance the realism of the game. When playing a game using such a terminal 300 in a car or the like, the seat belt device 1 equipped with the vibration function as described above can be connected to a tablet or portable game console via a wired or wireless connection to enable recognition as a game pad and vibration commands in the application can be executed (see FIG. 15). Alternatively, the vibration function using the vibration system 100 of the seat belt device 1 can also be experienced by connecting a terminal 300 as described above via the car audio system and causing the terminal to be recognized as a game pad, (see FIG. 16).

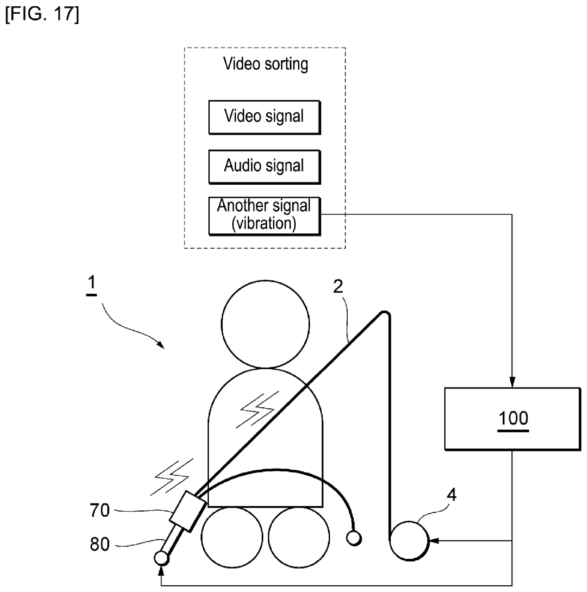

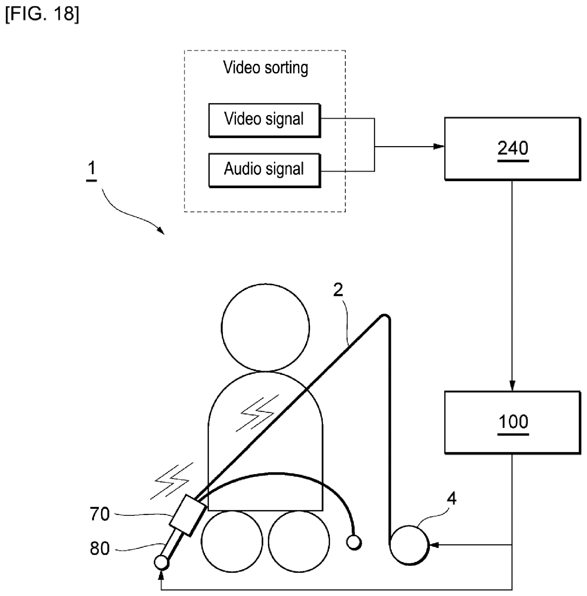

In addition, the vibration system 100 of the seat belt device 1 can also be used for watching movies or other video applications. For example, things that are expressed in movies include the motion of characters and vehicles, being grabbed, being hit, the movement of light, air, water, and the like, and emotions (surprise, tension, and the like), and these can also be reproduced by vibration and tension changes of the seat belt device 1. These changes can be gradual or sudden, but many gradual and sudden tension changes may be preset in the seat belt device 1 that are associated with the depictions expressed in movies, and may be linked when playing movie software to achieve this. Possible methods for linking operations include directly importing signals contained in the software, as in the case of the game described above (see FIG. 17), or generating signals by analyzing and recognizing images and sounds in real time (see FIG. 18).

### INDUSTRIAL APPLICABILITY

The present invention is suitable for application to a seat belt device and the vibration system thereof.

### DESCRIPTION OF CODES

1. Seat belt device
2. Seat belt
2t. Tongue
4. Seat belt retractor
5. Seat
10. Spindle
20. Drive motor (actuator)
21. Output shaft
22. Drive motor (actuator)
30. Power transmission mechanism
31. Motor gear
32. Transmission shaft
32a. First helical gear
32b. Second helical gear
33. Final gear (first rotating gear)
33a. Helical teeth
34. Clutch
34b. One-way clutch pawl
35a. Ratchet gear
70. Buckle
80. Buckle stay (bracket)
90. Drive motor (actuator)
92. Shoulder anchor
94. Outer anchor
100. Vibration system
200. ECU (control device)
210. Audio I/F
220. AD conversion signal processing unit
230. Signal mixing/selection unit
240. Signal generating unit
240B. BPF
240H. HPF
240L. LPF
242. Rectifier
244. Smoothing circuit
246. Modulating circuit
250. Comparator
260. Motor drive circuit
270. Motor connection line
300: Game console or other terminal
T_min. Minimum operating time
T_add. Compensation operation time
T_max: Maximum drive time

## Claims

1. A vibration system of a seat belt device configured to wind a vehicle seat belt, the vibration system of a seat belt device comprising:
an actuator provided in the seat belt device; and
a control device configured to process an input signal based on a prescribed vibration generation trigger to extract a rhythmic component signal, to perform pulse modulation processing at a fixed interval in accordance with a difference between the rhythmic component signal and a prescribed threshold, and to drive the actuator in accordance with a signal subjected to the pulse-modulated signal.

2. The vibration system for a seat belt device according to claim 1, wherein the control device includes a low-pass filter that attenuates high-frequency components of the input signal.

3. The vibration system for a seat belt device according to claim 2, wherein the prescribed vibration generation trigger is an audio signal of music being played in the vehicle cabin.

4. The vibration system for a seat belt device according to any one of claims 1 to 3, further comprising:
a spindle that winds up the seat belt;
a drive motor that generates power to rotate the spindle; and
a clutch that transmits power from the drive motor to the spindle when the drive motor rotates in one direction; wherein
the drive motor is used as the actuator.

5. The vibration system for a seat belt device according to claim 4, wherein the drive motor is a DC brush motor.

6. The vibration system for a seat belt device according to claim 5, wherein the control device reverses the rotation direction of the drive motor to disengage the clutch, and then rotates the drive motor in one direction to engage the clutch.

7. The vibration system for a seat belt device according to claim 6, wherein the clutch is released at a timing when the drive motor is not operating in response to the pulse-modulated signal.

8. The vibration system for a seat belt device according to any one of claims 1 to 3, further comprising:
a tongue attached to the seat belt;
a buckle to which the tongue is detachably attached;
a bracket supporting the buckle; and
a vibration motor provided in the buckle, wherein
the motor is used as the actuator.

9. The vibration system of the seat belt device according to claim 8, wherein the vibration motor is a DC brush motor having an eccentric weight.

10. The vibration system of a seat belt device according to claim 9, wherein, of the rhythm component signals, if there is a signal that exceeds the prescribed threshold that is shorter than a prescribed minimum operating time T_min, a compensation operation time T_add is added to the signal by the control device.

11. The vibration system for a seat belt device according to claim 9, wherein, of the rhythm component signals, if there is a signal that exceeds the prescribed that is longer than a predetermined maximum drive time T_max, the control device stops drive of the actuator for the portion of the signal that exceeds the maximum drive time T_max.

12. The vibration system for a seat belt device according to claim 9, wherein the control device temporarily increases the current value applied to the vibration motor at the beginning when driving the vibration motor in accordance with the pulse-modulated signal, and then decreases the current value.

13. The vibration system for a seat belt device according to claim 9, wherein, regenerative braking is used before stopping the vibration motor that is driven in response to the pulse-modulated signal.

14. A seat belt device comprising a vibration system according to any one of claims 1 to 3.

15. A seat belt device for a driver's seat equipped with the vibration system described in claim 4, wherein
when the control device detects that the seat belt has been pulled out by the driver leaning forward, for example, the control device stops the process of driving the actuator in accordance with the pulse-modulated signal, and reverses the direction of rotation of the drive motor to release the clutch, and upon detection that the driver has returned to their original position, the control device rotates the drive motor in one direction to connect the clutch, and resumes the process of driving the actuator in accordance with the pulse-modulated signal.
